# EUROPÄISCHE PATENTANMELDUNG

(11) **EP 1 331 795 A2**
(43) Veröffentlichungstag der Anmeldung: **30.07.2003**
(21) Anmeldenummer: 03000159.8
(22) Anmeldetag: 07.01.2003
(51) Int. Cl.: H04L 29/12

(54) **Umsetzer für Netzwerkszugriffe**

(30) Priorität: 25.01.2002 DE 10203182
(71) Anmelder: Wincor Nixdorf International GmbH, 33106 Paderborn (DE)
(72) Erfinder: Luecking, Oliver, 33102 Paderborn (DE)

(57) **Zusammenfassung**

Umsetzer (21) für Netzwerkzugriffe, umfassend:
- eine Klientenschnittstelle (33), über die ein Klient (23) Netzdokumente mitteln eines lokalen Dokumentnamens anfordert und erhält;
- eine Netzschnittstelle (31), über die der Umsetzer Netzdokumente mittels eines globalen Dokumentnamens von einem oder mehreren Servern (12a, 12b, 12c) anfordert;
- einem Assoziativspeicher (22) zur Umsetzung von lokalen Dokumentnamen in globale Dokumentnamen;
- eine Steuerschnittstelle (32), über die der Assoziativspeicher (22) verändert werden kann.

## Beschreibung

Die Erfindung betrifft den Zugriff auf symbolisch adressierte Elemente in einem Netzwerk, insbesondere mit dem HTTP-Protokoll auf HTML-Seiten.

Für eine Vielzahl von Anwendungen ist der Zugriff von einer Arbeitsstation auf Daten eines Servers mit dem Protokoll 'http' und einem Anzeigeprogramm (Browser) weit verbreitet. Um die Funktionalität der dabei überwiegend verwendeten Markierungssprache HTML zu erweitern, werden vielfach eingebettete Programme, sog. Applets, insbesondere in der Porgrammiersprache JAVA der Fa. Sun Microsystems verwendet.

Aus Sicherheitsgründen ist es dabei einem über ein Netzwerk geladenem Applet nur möglich, zu eben diesem Server eine Datenverbindung aufzubauen und Dokumente abzurufen. In einigen Anwendungen ist diese Einschränkung jedoch zu restriktiv, so daß Alternativlösungen benötigt werden.

In der Patentschrift US 6,324,574 wird ein 'relay server' beschrieben, der auf demselben Server aktiv ist, vom dem das betroffene Applet stammt, und der Anfragen an andere Rechner im Netz stellvertretend ausführt und die Ergebnisse zurückschickt. Im Unterschied zu einem 'proxy server' erfolgt dieses nicht transparent, d.h. aus Sicht des Browsers werden die Daten alle vom 'relay server' bereitgestellt. In dem Dokument wird zudem eine eigen Verbindung benutzt, so daß auch kein 'gateway' vorliegt.

In der Patentschrift US 5,987,523 wird ein 'redirector' beschrieben, bei dem ein Applet in einem Browser zwei Verbindungen zu demselben Rechner, von dem das Applet geladen wurde, aufbaut und über die Verbindungen den Zugriff auf das weitere Netzwerk durchführt.

In der Patentschrift 6,049,821 wird ein erweiterter Proxy-Server dargestellt, bei dem vielfache Möglichkeiten zur Filterung der vermittelten Daten vorgesehen sind. Gemäß der Beschreibung Sp.14 Z.26 bis Sp.15 Z.44 dient die Filterung auf den Adressen der Blockierung von Datenabfragen.

In dem Dokument RFC 2068 (HTTP/1.1 vom 1.1.1997) wird folgende Terminologie verwendet:
- proxy:: An intermediary program which acts as both a server and a client for the purpose of making requests on behalf of other clients. Requests are serviced internally or by passing them on, with possible translation, to other servers.
- gateway:: A server which acts as an intermediary for some other server. Unlike a proxy, a gateway receives requests as if it were the origin server for the requested resource; the requesting client may not be aware that it is communicating with a gateway.

Ein HTTP-Proxy beispielsweise erhält die URL für ein Dokument auf einem anderen Sever, also beispielsweise die folgenden beiden Zeilen:
GET http://www.wincor-nixdorf.com/ HTTP/1.1
HOST: my.proxy.net

Der Proxy 'my.proxy.net' fügt dann in die Kopfzeilen (header) der Antwort eine 'VIA:'-Angabe ein. Ist der Server (z.B. mittels des vielfach verwendeten APACHE Programmpakets) nicht als Proxy konfiguriert, würde er statt dessen eine Fehlermeldung wie '404: NOT FOUND' zurückgeben.

Mit Hilfe des Moduls 'mod_rewrite' können in APACHE auch einfache Gateway-Funktionen implementiert werden, indem beispielsweise aus der URL
http://www.wincor-nixdorf.com/siemens/
die URL
http://www.siemens.com/
erzeugt. Jedoch können diese Umsetzvorschriften nicht im laufenden Betriebe verändert werden. Zudem kann zwar der Abruf über die 'proxy'-Komponente des APACHE erfolgen; ein gezieltes Vorladen ist jedoch nicht vorgesehen.

Die Erfindung schlägt einen Umsetzer ('gateway') vor, der über eine Assoziativ-Tabelle verfügt. Mittels dieser Tabelle werden die eingehenden Verweise umgesetzt. Diese Tabelle ist über eine Klientenschnittstelle im laufenden Betrieb modifizierbar.

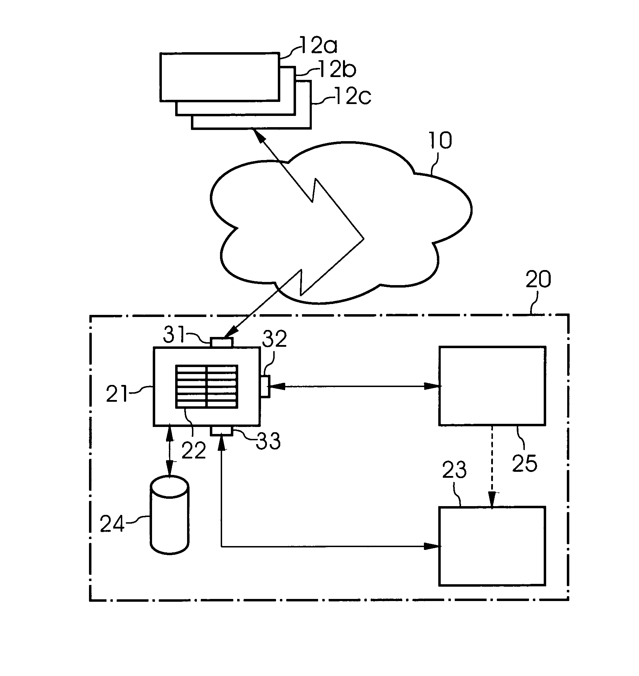

In Fig. 1 ist schematisch eine Konfiguration dargestellt, in der die Erfindung verwendet werden kann.

Ein Netzwerk 10 wie das Internet erlaubt es einem Gerät 20, z.B. einem Transaktionsterminal, auf Server 12a, 12b, 12c zuzugreifen.

Innerhalb des Geräts 20 befindet sich ein Umsetzer 21. Dieser hat eine Netzschnittstelle 31, mittels derer über das (Internet-) Netzwerk 10 von mit einem oder mehreren Servern 12a, 12b, 12c Netzdokumente abgerufen werden können. Hierbei werden bevorzugt das verbreitete Dokumentenformat HTML und das Protokoll HTTP/HTTPS verwendet.

Der Umsetzer 21 hat ferner eine Klientenschnittstelle 33, die von einem in einem Anzeigeprogramm (Browser, nicht gezeigt) ausgeführten Anwendungsprogramm 25 benutzt wird. Über diese Schnittstelle, die gleichfalls bevorzugt HTML und HTTP verwendet, werden Netzdokumente angefordert.

Weiterhin umfaßt der Umsetzer 21 eine Assoziativtabelle 22, die eine Zuordnung lokaler Dokumentennamen zu globalen Dokumentennamen bewirkt. Dokumentennamen für Netzdokumente sind üblicherweise als URL (uniform resource locator), gegeben, z.B.
http://server.host.com/dir/document.type

Da sich in der bevorzugten Anwendung der Erfindung Umsetzer 21 und Anzeigeprogramm 23 auf demselben Rechner befinden, lautet der lokale Dokumentenname, d.h. die URL, für die Benutzung der Klientenschnittstelle 33 typischerweise
http://localhost/document.type

Sobald nun über die Klientenschnittstelle 33 ein Netzdokument angefordert wird, verwendet der Umsetzer 21 die Assoziativtabelle, um einen zugehörigen globalen Dokumentennamen zu bestimmen. Mittels dieses globalen Dokumentennamens wird dann über die Netzschnittstelle 31 das Dokument von dem passenden Server 12a, 12b, 12c abgerufen und über die Klientenschnittstelle 33 an das Anzeigeprogramm weitergeleitet.

Zweckmäßigerweise wird dabei jedes über die Netzschnittstelle 31 abgerufene Dokument in einem Pufferspeicher 24 (cache) abgelegt, so daß eine zweite Anforderung keinen Zugriff zum Netzwerk 10 mehr erfordert. Ein zusätzlicher Mechanismus bekannter Art legt fest, wann ein Eintrag im Pufferspeicher als veraltet zu gelten hat. Hierfür kann sowohl der entsprechende Mechanismus des HTTP-Protokolls als auch ein zusätzlicher Eintrag in der Assoziativtabelle 22 verwendet werden. Der zustätzliche Eintrag in der Assoziativtabelle 22 hat gegenüber dem HTTP-Mechanismus den Vorteil, daß keine Anfrage beim Server notwendig ist.

Alternativ zu den bislang beschriebenen Puffern auf Anforderung ('on demand') wird in der bevorzugten Ausführung das Dokument bereits dann über die Netzschnittstelle abgerufen und im Pufferspeicher abgelegt, wenn der Eintrag in der Assoziativtabelle angelegt wird und ggf. ein passender Indikator in dem Eintrag gesetzt ist. Dazu hat der Umsetzer eine Klientenschnittstelle 32, über die der Inhalt des Assoziativspeichers 22 durch ein Steuerprogramm 25 beeinflußt werden kann. Basisfunktion ist das Hinzufügen von Einträgen. Im einfachsten Fall wird dann über diese Schnittstelle eine neue Assoziation übergeben, bestehend aus lokalem und globalem Dokumentnamen, ggf. ergänzt um Parameter für sofortiges oder bedarfsgemäßes Laden bzw. Gültigkeitsdauer.

Andere Funktionen betreffen das Löschen von Einträgen, Setzen der Gültigkeitsdauer von Einträgen usw.

In der Patentanmeldung WO 01/86402 ist ein Verfahren dargestellt, bei dem bei einer Anwendung in einem Anzeigeprogramm (browser) Steuerteil und Darstellungsteil getrennt sind, wobei das Steuerteil URL an den Darstellungsteil übergibt. In diesem Fall kann das Steuerteil als Steuerprogramm 25 fungieren und an das Darstellungsteil nur lokale URL übergeben. Dieses in der genannten Anmeldung mit JAVASCRIPT beschriebene Verfahren kann genauso gut mit JAVA Applets durchgeführt werden. In diesem Fall kann die Erfindung so modifiziert werden, daß über die Klientenschnittstelle der globale Dokumentenname, ggf. mit weiteren Parametern, übergeben wird und der Umsetzer mit einem generierten lokalen Dokumentennamen antwortet.

Letzterer wird dann an den Darstellungsteil weitergegeben, welcher über die Klientenschnittstelle 33 dann die Dokumente abruft.

In einer Weiterbildung der Erfindung sind die Einträge der Assoziativtabelle nicht verbatim zu interpretieren, sondern stellen eine ganze Klasse von Adressen dar. Verarbeitet hierzu, weil bekannt und effizient, sind reguläre Ausdrücke und die passenden Ersetzungsmuster, wie sie z.B. von dem unter UNIX verbreiteten Programmen 'ed', 'sed', 'expr', 'awk' oder 'perl' verwendet werden. Andere Darstellungen und Ersetzungsmethoden, wie Produktionsregeln kontextfreier Grammatiken oder von Zweischicht-Grammatiken sind gleichfalls möglich.

Es ist ohne weiteres möglich, für die Klientenschnittstelle und die Netzschnittstelle verschiedene Protokolle zu verwenden. Besonders vorteilhaft ist die Kombination, bei der für die Klientenschnittstelle 'http' und die Netzschnittstelle 'https' verwendet wird. Damit wird einerseits erreicht, daß der höhere Aufwand für die sichere Verbindung mit 'https' nur bei Abruf über das allgemeine Netzwerk 10 verwendet wird und die aus dem Pufferspeicher 24 abgerufenen Dokumente die schnellere, nicht gesicherte Verbindung mit 'http' verwenden. Außerdem ist die Speicherung der Schlüssel zentralisiert.

## Patentansprüche

1. Umsetzer (21) für Netzwerkzugriffe, umfassend:
- eine Klientenschnittstelle (33), über die ein Klient (23) Netzdokumente mittels eines lokalen Dokumentnamens anfordert und erhält;
- eine Netzschnittstelle (31), über die der Umsetzer Netzdokumente mittels eines globalen Dokumentnamens von einem oder mehreren Servern (12a, 12b, 12c) anfordert;
- einem Assoziativspeicher (22) zur Umsetzung von lokalen Dokumentnamen in globale Dokumentnamen;
- eine Steuerschnittstelle (32) zum Verändern des Assoziativspeichers (22).

2. Umsetzer nach Anspruch 1, wobei die über die Netzschnittstelle angeforderten Netzdokumente in einem Pufferspeicher (24) gepuffert werden und nur dann über die Netzschnittstelle (31) erneut abgerufen werden, wenn die gepufferten Netzdokumente veraltet sind.

3. Umsetzer nach Anspruch 2, wobei nach der Erstellung eines Eintrags in dem Assoziativspeicher (22) das betroffene Netzdokument über die Netzschnittstelle (31) angefordert und in dem Pufferspeicher abgelegt wird, ohne daß das Netzdokument zuvor über die Klientenschnittstelle (33) angefordert wurde.

4. Umsetzer nach einem der vorherigen Ansprüche, wobei ein Eintrag der Assoziativtabelle ein Mustereintrag sein kann, der mehrere globale Dokumentnamen spezifiziert.

5. Umsetzer nach einem der vorherigen Ansprüche, wobei das über die Steuerstelle angegebene Protokoll und das über die Netzwerkschnittelle verwendete Protokoll unterschiedlich sind, insbesondere 'http:' durch 'https' ersetzt werden.

6. Transaktionstermial, enthaltend eine Datenverarbeitungseinrichtung, die sowohl einen Umsetzer nach einem der vorhergehenden Ansprüche als auch ein die Klientenschnittstelle des Umsetzers benutzendes Anzeigeprogramm enthält.

7. Programmprodukt, auf das einer der vorhergehenden Ansprüche zutrifft.
